# EUROPEAN PATENT SPECIFICATION

(11) **EP 2 613 593 B1**
(45) Date of publication and mention of the grant of the patent: **11.01.2017**
(21) Application number: 11821041.8
(22) Date of filing: 21.06.2011
(51) Int. Cl.: H04W 52/02, H04W 88/08, H04W 24/08, H04W 76/04

(54) **ENERGY-SAVING CONTROL METHOD AND SYSTEM FOR WIRELESS NETWORK**
ENERGIESPARENDES STEUERUNGSVERFAHREN UND -SYSTEM FÜR EIN DRAHTLOSES NETZWERK
PROCÉDÉ ET SYSTÈME DE COMMANDE D'ÉCONOMIE D'ÉNERGIE POUR RÉSEAU SANS FIL

(30) Priority: 02.09.2010 CN 201010272975
(43) Date of publication of application: 10.07.2013
(73) Proprietor: ZTE Corporation, Shenzhen, Guangdong 518057 (CN)
(72) Inventor: LIAO, Kaimeng, Shenzhen Guangdong 518057 (CN); NI, Hua, Shenzhen Guangdong 518057 (CN); LI, Wei, Shenzhen Guangdong 518057 (CN)
(74) Representative: Lavoix
(86) International application number: PCT/CN2011/076063
(87) International publication number: WO 2012/028015

(56) References cited:
- CN-A- 101 080 047
- CN-A- 101 179 814
- CN-A- 101 400 125
- JP-A- 2008 109 423
- US-B1- 6 584 330
- HUAWEI: "Overview to LTE energy saving solutions to cell switch off/on", 3GPP DRAFT; R3-100162, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Valencia, Spain; 20100118, 15 January 2010 (2010-01-15), XP050424028, [retrieved on 2010-01-15]
- "3rd Generation Partnership Project; Technical Specification Group Services and System Aspects; Telecommunication management; Study on Energy Savings Management (ESM) (Release 10)", 3GPP STANDARD; 3GPP TR 32.826, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 30 March 2010 (2010-03-30), pages 1-33, XP050402127, [retrieved on 2010-03-30]

## Description

### TECHNICAL FIELD

The disclosure relates to an energy-saving management method in the field of communications, and in particular to an energy-saving control method and system for a wireless network.

### BACKGROUND

With the continuous development and progress of society, human have a growing demand on energy, consequently, the consumption of energy increases and energy is dried up gradually. At present, energy constraints have become an unavoidable and increasingly acute social problem. With the intensifying price competition of communication market, the reduction of operation cost becomes the key emphasis of each enterprise. In the condition of guaranteeing the quality of service, the reduction of energy consumption becomes the best option for reducing operation cost, and thus becomes a new profit growth point of operators.

From the distribution of energy consumption in the field of mobile communications, it can be seen that the energy consumption of base station accounts for 90% of the energy consumption of an entire system; the energy consumption of base station is the major part needing energy-saving control in the mobile communication network. Taking the base station in the existing most popular Global System for Mobile Communications (GSM) for example, a typical macro base station located indoors is provided with 12 carrier frequencies, and the average power consumption is 1600 W; in the existing GSM, there are about 225, 000 macro base stations located indoors; taking the number of 225,000 for example, the power consumption is nearly 3.2 billion KW per year; if electric charge is 0.6 Yuan RMB/KW, then the electric charge of the base station is nearly 2 billion Yuan RMB.

Specifically, the energy consumption of base station mainly includes: energy consumption of communication equipment, energy consumption of electric distribution system, energy consumption of room environment, energy consumption of maintenance and others; for the base station located indoors, the energy consumption of communication equipment and room environment accounts for 80% of that of the base station; and the energy consumption of room environment is mainly embodied in the energy consumption of air conditioning system; if the power consumption of communication equipment is reduced, the heat amount of the communication equipment is reduced; correspondingly, the power consumption of the air conditioning system is reduced; then the power consumption of communication equipment is a major element of the energy consumption of base station. For the base station located outdoors, the power consumption of communication equipment also accounts for a big part of the energy consumption of the base station; so the reduction of the power consumption of communication equipment should be the main direction of the energy-saving control of base station.

The existing energy-saving control method generally adopts the following process: a network manager sets an energy-saving switch and parameters, and sends the parameters to a network element; after receiving the parameters, the network element performs an energy-saving analysis and executes energy-saving operation.

From the description above, it can be seen that, in the existing energy-saving control method, it is the network element that performs an energy-saving analysis and executes energy-saving operation, and the network manager only sets an energy-saving switch and parameters; however, this mode is only suitable for performing energy-saving control on the base station in a local area or the base station controlled by a single base station controller, but cannot synthesize the operation condition of the entire network to perform energy-saving management.

According to "overview to LTE energy saving solutions to cell switch off/on", it is intended to provide an overview to the energy saving solution to "cell switch off/on" in a LTE network and give some proposals to the following process of RAN3 solution work.

According to US6584330 Equipment and/or functions at a node (e.g., base station) of a cellular telecommunications network are turned off or put into sleep mode during periods of low traffic in order to reduce power consumption by the node. The equipment and/or functions are then turned back on again during periods of high traffic load in order to provide the required service to users. Exemplary actions which can be taken in order to save power during the power saving mode include, for example and without limitation: 1) switching off or putting to sleep one or more MCPAs, 2) turning off one or more carriers, 3) turning off one or more sectors with regard to a frequency, 4) turning off or putting to sleep at least a portion or part of one or more circuit boards, and/or 5) reducing fan speed based upon traffic load of the node. Any one or more of these or similar actions may be taken in order to enable the node to save power when its traffic load is at a low level. Power consumption can thus be reduced.

According to "3rd Generation Partnership Project; Technical Specification Group Services and System Aspects; Telecommunication management; Study on Energy Savings Management (ESM) (Release 10)", in new generation radio Access Networks such as LTE, Energy Savings Management (ESM) function takes place especially when mobile network operators want to reduce Tx power, switch off/on cell based on measurements made in the networl having shown that there is no need to maintain active the full set of Network Elements (NEs) capabilities.

### SUMMARY

In view of the above, the main purpose of the disclosure is to provide an energy-saving control method and system for a wireless network, which can rapidly respond to the load change of a base station and effectively realize energy-saving management of the entire wireless network.

The features of the method and device according to the present disclosure are defined in the independent claims, and the preferable features according to the present invention are defined in the dependent claims.

With the energy-saving control method and the energy-saving control system for the wireless network provided by the disclosure, the network element compares a cell performance index value of a base station controlled by the network element itself with a cell performance index threshold value contained in the energy-saving control parameters periodically and reports a message to the network manager when the cell performance index value of the base station is beyond the cell performance index threshold value; after receiving the message, the network manager constitutes an energy-saving strategy and notifies the network element to perform energy-saving operation. The method and the system of the disclosure can rapidly respond to the load change of the base station, thereby effectively realizing the energy-saving management of the entire wireless network.

In addition, after receiving the message, the network manager acquires the coverage, cell performance index value and energy-saving state of a surrounding base station of the base station according to the coverage and geographic location of the base station of which the cell performance index value is beyond the cell performance index threshold value in the message, and constitutes an energy-saving strategy according to the acquired information and the cell performance index value in the message; therefore, the energy-saving management of the entire wireless network can be realized more effectively.

### BRIEF DESCRIPTION OF THE DRAWINGS

Fig. 1 shows a flowchart of an energy-saving control method for a wireless network in the disclosure; and
Fig. 2 shows a structure diagram of an energy-saving control system for a wireless network in the disclosure.

### DETAILED DESCRIPTION

The disclosure is described below in further detail in conjunction with the drawings and specific embodiments.

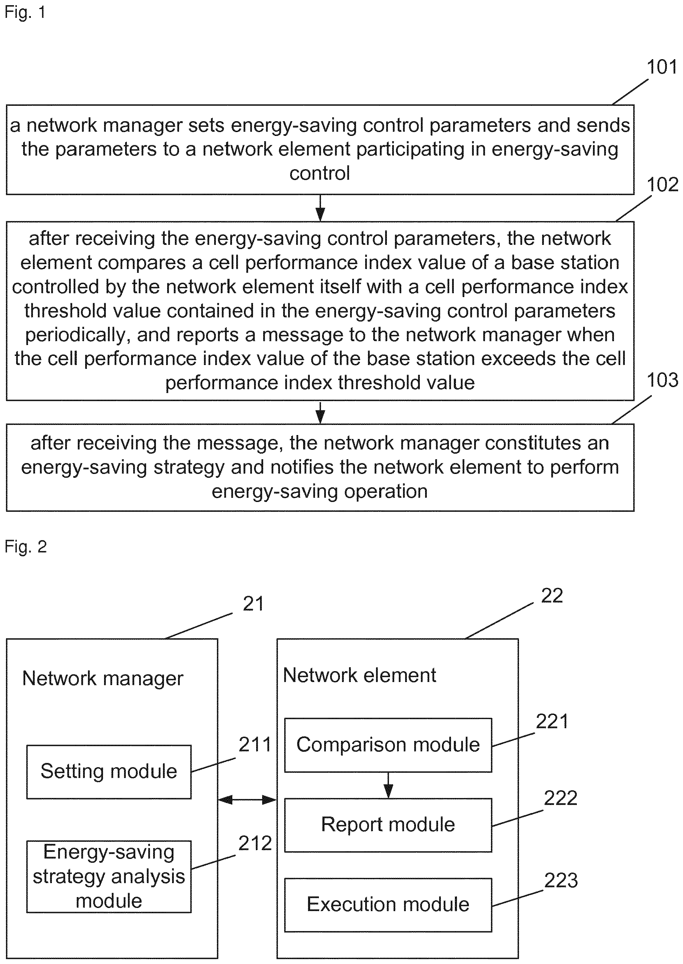

An energy-saving control method for a wireless network provided by the disclosure, as shown in Fig. 1, includes the following steps:
Step 101: a network manager sets energy-saving control parameters and sends the parameters to a network element participating in energy-saving control.

Here, the network manager can be a network element management system, or other upper-level network management systems such as a Network Management System (NMS); if the network manager is a network element management system, the network manager directly sends the parameters to the network element participating in energy-saving control; if the network manager is an upper-level network management system such as an NMS, the network manager can send the energy-saving control parameters to the network element participating in energy-saving control through a northbound interface. The energy-saving control parameters include an energy-saving switch, a cell performance index threshold value, a detection period and the like.

The network manager can send the set energy-saving control parameters to all the network elements participating in energy-saving control.

The network element participating in energy-saving control can be selected according to user's requirements, wherein the network element may be all or part of network elements managed by the network manager.

When the cell performance index threshold value is set, a cell performance index threshold value defined by the system can be adopted, or the cell performance index threshold value can be defined according to requirements. The cell performance index of the network element is selected according to the type of services born by the network element itself; for example, if a certain network element is of a GSM network, then cell traffic, uplink and downlink General Packet Radio Service (GPRS) throughput and the like can be selected as the cell performance index; if a certain network element is of a 3^{rd} -Generation (3G) network, then circuit domain traffic, packet domain traffic, packet domain throughput and the like can be selected as the cell performance index; if a certain network element is of a Long Term Evolution (LTE) network, then uplink and downlink throughput of a cell and the like can be selected as the cell performance index.

In actual application, the cell performance index threshold value can be set of a plurality of layers; and the threshold value corresponding to each layer is set according to requirements, so that energy-saving control can be better implemented. For example, four layers such as full load, high load, low load and zero load can be set, then a threshold value corresponding to each layer is set according to requirements.

The network element detects a cell performance index value periodically according to the detection period in the energy-saving control parameters, that is, the network element detects the cell performance index value once every other a preset detection period; when being set, the detection period can be set according to requirements, for example, 3 min, 5 min and so on, so as to improve the frequency of detecting the load of network element, thereby rapidly responding to the load change and immediately providing an energy-saving measure. The detection period can be set according to network elements of different service types and the cell performance index so as to enhance the flexibility of detection.

The network element refers to a network element which can control power-on or power-off of the base station, specifically, if the network element is of a GSM network or of 3G network element, then the network element is a base station controller; if the network element is of an LTE network, then the network element is an evolved NodeB (eNB).

Step 102: after receiving the energy-saving control parameters, the network element compares a cell performance index value of a base station controlled by the network element itself with a cell performance index threshold value contained in the energy-saving control parameters periodically, and reports a message to the network manager when the cell performance index value of the base station is beyond the cell performance index threshold value.

Here, after receiving the energy-saving control parameters, the network element can share the service load of other base stations only after turning on the energy-saving control switch in the energy-saving control parameters.

The periodic comparison refers to: comparing periodically according to the detection period in the energy-saving control parameters.

The cell performance index value of the base station being beyond the cell performance index threshold value refers that the cell performance index value of the base station is beyond the preset cell performance index threshold value upwards or downwards; for example, if an upper limit and a lower limit are set for the threshold value, when the cell performance index value of the base station is greater than the upper limit of the threshold value, a message is reported to the network manager; when the cell performance index value of the base station is lower than the lower limit of the threshold value, a message is reported to the network manager too; in this way, energy can be utilized reasonably and energy-saving control can be better implemented.

The message can be of Quality of Service (QoS) alarm, notification and other types; the message includes: coverage, a cell performance index value and a current state of the base station of which the cell performance index value is beyond the cell performance index threshold value.

The state can be a non-energy saving state, or an energy-saving state, or an energy-saving compensation state; in which the non-energy saving state refers that the base station is in a normal state, the energy-saving state refers that the base station is powered off to save energy, and the energy-saving compensation state refers that the base station is supplying coverage compensation to other base stations, that is, sharing the service load of other base stations.

Step 103: after receiving the message, the network manager constitutes an energy-saving strategy and notifies the network element to perform energy-saving operation.

Here, the network manager constituting an energy-saving strategy after receiving the message specifically includes: after receiving the message, the network manager acquires coverage, a cell performance index value and an energy-saving state of a surrounding base station of the base station according to coverage and a geographic location of the base station of which the cell performance index value is beyond the cell performance index threshold value in the message, and constitutes the energy-saving strategy according to the acquired information and the cell performance index value in the message.

The network manager configures the geographic location of each base station in advance; and the geographic location can be the longitude and latitude of the location in which the base station is.

The acquiring coverage, a cell performance index value and an energy-saving state of a surrounding base station specifically includes:
according to the coverage and the geographic location of the base station of which the cell performance index value is beyond the cell performance index threshold value in the message, the network manager finds a surrounding base station of the base station of which the cell performance index value is beyond the cell performance index threshold value, and sends a message to the surrounding base station; and
after receiving the message, the surrounding base station returns the information containing the coverage, the cell performance index value and the current state of the surrounding base station itself to the network manager.

The surrounding base station refers to a base station surrounding the base station of which the cell performance index value is beyond the cell performance index threshold value.

When the cell performance index value of the base station is lower than a lower limit of the threshold value, the constituting the energy-saving strategy according to the acquired information and the cell performance index value in the message specifically includes:
the network manager finds a base station of which coverage is overlapped with the coverage of the base station of which the cell performance index value is beyond the cell performance index threshold value, and evaluates out a base station which can provide coverage compensation in all the base stations of which the coverage is overlapped; and
according to a service type and the cell performance index value of the base station in the message, the network manager determines, in all the base stations which can provide coverage compensation, a base station which can bear service load of the base station of which the cell performance index value is beyond the cell performance index threshold value, and notifies the base station of which the cell performance index value is beyond the cell performance index threshold value to power down.
the coverage of a base station being overlapped with the coverage of other base station contains two conditions as follows.
   First: the coverage of the base station of which the cell performance index value is beyond the cell performance index threshold value is partially overlapped with the coverage of other base stations; or, the base station of which the cell performance index value is beyond the cell performance index threshold value is not covered by other base stations, however, through the relative location between base stations and the coverage capability, it can be considered that the coverage of the base station of which the cell performance index value is beyond the cell performance index threshold value is overlapped with the coverage of other base stations.
   Second: the base station of which the cell performance index value is beyond the cell performance index threshold value is located in the coverage of other base stations.

When the base station which can bear the service load of the base station of which the cell performance index value is beyond the cell performance index threshold value is determined out, after the network manager calculates which base station bears the service load of the base station of which the cell performance index value is beyond the cell performance index threshold value according to an algorithm of the network manager itself, the entire system can be in the most energy-efficient state under the premise of guaranteeing the quality of service, hereby determining the base station which can bear the service load of the base station of which the cell performance index value is beyond the cell performance index threshold value.

In the condition that the cell performance index value of the base station is lower than the lower limit of the threshold value, for example, for a Femto base station in the coverage of a macro base station, the service load of the Femto base station is very low after 12:00 in the evening; therefore, the Femto base station can be powered off and the macro base station is used to provide coverage; in the condition that a base station of GSM/Universal Mobile Telecommunications System (UMTS) and a base station of LTE are overlapped, the base station of LTE can be powered off if the high speed data service or stream media service traffic is very low, and the base station of GSM/UMTS can be used to provide compensation coverage so as to provide voice services and low-speed data services.

When the cell performance index value of the base station is greater than the upper limit of the threshold value, it is indicated that the service load of the base station of which the cell performance index value is beyond the cell performance index threshold value is beyond a limit value, it is needed to power on a base station in an energy-saving state to share the service load; at this time, the energy-saving strategy is constituted according to the energy-saving state of the base station of which the cell performance index value is beyond the cell performance index threshold value. Specifically, when the base station of which the cell performance index value is beyond the cell performance index threshold value is in a non-energy saving state, the constituting the energy-saving strategy according to the acquired information and the cell performance index value in the message specifically includes:
finding a base station of which coverage is overlapped with the coverage of the base station of which the cell performance index value is beyond the cell performance index threshold value, and judging, in all the base stations of which the coverage is overlapped, whether there is a base station in an energy-saving state; if so, notifying the base station in the energy-saving state to power on so as to share service load of the base station of which the cell performance index value is beyond the cell performance index threshold value. If there is no base station in the energy-saving state, this condition cannot be processed; since this condition cannot embody energy-saving control, it is not contained in the disclosure.

When the base station of which the cell performance index value is beyond the cell performance index threshold value is in an energy-saving compensation state, the constituting the energy-saving strategy according to the acquired information and the cell performance index value in the message specifically includes:
finding a base station of which coverage is overlapped with the coverage of the base station of which the cell performance index value is beyond the cell performance index threshold value, and judging, in all the base stations of which the coverage is overlapped, whether there is a base station in an energy-saving state; if so, notifying the base station in the energy-saving state to power on so as to share service load of the base station of which the cell performance index value is beyond the cell performance index threshold value; and the base station of which the cell performance index value is beyond the cell performance index threshold value exiting the energy-saving compensation state. If there is no base station in the energy-saving state, this condition cannot be processed; since this condition cannot embody energy-saving control, it is not contained in the disclosure.

For example, when entering a BUSY mode from an IDLE mode, the network element can wake up a base station in an energy-saving state to share the service load.

### Embodiment 1

The application scene of this embodiment is as follows: the network element is of GSM; the service is a voice service and a low-speed data service.

When setting energy-saving control parameters containing an energy-saving switch, a cell performance index threshold value and a detection period, a network manager selects traffic, uplink and downlink GPRS throughput of a cell as the cell performance index, and sets corresponding threshold values; then the network manager sends the set energy-saving control parameters to a Base Station Controller (BSC); after receiving the energy-saving control parameters, the BSC compares a cell performance index value of the base station with the cell performance index threshold value in the energy-saving control parameters periodically;
when the cell performance index value of the base station is lower than a lower limit of the cell performance index threshold value, the BSC reports a message to the network manager; after receiving the message, the network manager constitutes an energy-saving strategy, that is, analyzing whether the base station needs to power down; after determining that the base station needs to power down, the network manager notifies the BSC, which then powers off the base station; when the cell performance index value of the base station is greater than an upper limit of the cell performance index threshold value, the BSC reports a message to the network manager; after receiving the message, the network manager constitutes an energy-saving strategy, that is, analyzing whether the base station needs a base station which is in an energy-saving state to power on; after determining that the base station needs a base station which is in an energy-saving state to power on, the network manager notifies the BSC, which then powers on the base station which is in the energy-saving state to share the service load.

### Embodiment 2

The application scene of this embodiment is as follows: the network element is of 3G; the service is a voice service and a high-speed data service.

When setting energy-saving control parameters containing an energy-saving switch, a cell performance index threshold value and a detection period, a network manager selects circuit domain traffic, packet domain traffic and packet domain throughput as the cell performance index, and sets corresponding threshold values; then the network manager sends the set energy-saving control parameters to a Radio Network Controller (RNC); after receiving the energy-saving control parameters, the RNC compares a cell performance index value of the base station with the cell performance index threshold value in the energy-saving control parameters periodically;
when the cell performance index value of the base station is lower than a lower limit of the cell performance index threshold value, the RNC reports a message to the network manager; after receiving the message, the network manager constitutes an energy-saving strategy, that is, analyzing whether the base station needs to power down; after determining that the base station needs to power down, the network manager notifies the RNC, which then powers off the base station; when the cell performance index value of the base station is greater than an upper limit of the cell performance index threshold value, the RNC reports a message to the network manager; after receiving the message, the network manager constitutes an energy-saving strategy, that is, analyzing whether the base station needs a base station which is in an energy-saving state to power on; after determining that the base station needs a base station which is in an energy-saving state to power on, the network manager notifies the RNC, which then powers on the base station which is in the energy-saving state to share the service load.

### Embodiment 3

The application scene of this embodiment is as follows: the network element is of LTE; the service is a Voice over Internet Protocol (VOIP) service and a stream media service.

When setting energy-saving control parameters containing an energy-saving switch, a cell performance index threshold value and a detection period, a network manager selects uplink and downlink throughput of a cell as the cell performance index, and sets corresponding threshold values; then the network manager sends the set energy-saving control parameters to an eNB; after receiving the energy-saving control parameters, the eNB compares a cell performance index value of the base station with the cell performance index threshold value in the energy-saving control parameters periodically;
when the cell performance index value of the base station is lower than a lower limit of the cell performance index threshold value, the eNB reports a message to the network manager; after receiving the message, the network manager constitutes an energy-saving strategy, that is, analyzing whether the base station needs to power down; after determining that the base station needs to power down, the network manager notifies the eNB to power off the base station; when the cell performance index value of the base station is greater than an upper limit of the cell performance index threshold value, the eNB reports a message to the network manager; after receiving the message, the network manager constitutes an energy-saving strategy, that is, analyzing whether the base station needs a base station which is in an energy-saving state to power on; after determining that the base station needs a base station which is in an energy-saving state to power on, the network manager notifies the eNB to power on the base station so as to share the service load.

In order to implement the method above, the disclosure also provides an energy-saving control system for a wireless network; as shown in Fig. 2, the system includes: a network manager 21 and a network element 22;
the network manager 21 is configured to set energy-saving control parameters and send the parameters to the network element 22; and to constitute an energy-saving strategy and notify the network element 22 to perform energy-saving operation after receiving a message reported by the network element 22; and
the network element 22 is configured to compare a cell performance index value of a base station controlled by the network element itself with a cell performance index threshold value contained in the energy-saving control parameters periodically after receiving the energy-saving control parameters sent from the network manager 21, to report the message to the network manager 21 when the cell performance index value of the base station is beyond the cell performance index threshold value, and to perform the energy-saving operation after receiving the notification from the network manager 21.

Here, it should be noted that the network element can be more than one network element, and the network element refers to a network element which can control the power-on or power-off of the base station.

The network manager 21 may further include: a setting module 211 and an energy-saving strategy analysis module 212;
the setting module 211 is configured to set energy-saving control parameters and send the parameters to the network element 22; and
the energy-saving strategy analysis module 212 is configured to constitute an energy-saving strategy and notify the network element 22 to perform energy-saving operation after receiving a message reported by the network element 22.

The network element 22 may further include: a comparison module 221, a report module 222 and an execution module 223;
the comparison module 221 is configured to compare a cell performance index value of a base station controlled by the network element 22 itself with a cell performance index threshold value contained in the energy-saving control parameters periodically after receiving the energy-saving control parameters sent from the network manager 21, to send the message to the report module 222 when the cell performance index value of the base station is beyond the cell performance index threshold value;
the report module 222 is configured to report the message to the network manager 21 after receiving the message sent from the comparison module 221; and
the execution module 223 is configured to perform the energy-saving operation after receiving the notification from the network manager 21.

The energy-saving strategy analysis module 212 is specifically configured to acquire coverage, a cell performance index value and an energy-saving state of a surrounding base station of the base station according to coverage and a geographic location of the base station of which the cell performance index value is beyond the cell performance index threshold value in the message, and to constitute the energy-saving strategy according to the acquired information and the cell performance index value in the message.

Here, the specific process of the energy-saving strategy analysis module in the system of the disclosure has been described in the above content, and no further description is needed here.

The above are only the preferred embodiments of the disclosure and are not intended to limit the scope of protection of the disclosure.

## Claims

1. An energy-saving control method for a wireless network, **characterized in that** the method comprises: setting, by a network manager, energy-saving control parameters, and sending the parameters to a network element participating in energy-saving control (101);
after receiving the energy-saving control parameters, comparing, by the network element, a cell performance index value of a base station controlled by the network element itself with a cell performance index threshold value contained in the energy-saving control parameters periodically, and reporting a message to the network manager when the cell performance index value of the base station is beyond the cell performance index threshold value (102); and
after receiving the message, constituting, by the network manager, an energy-saving strategy and notifying the network element to perform energy-saving operation (103);
wherein a cell performance index of the network element is selected according to a type of services born by the network element itself of a GSM network or 3rd generation network or a long term evolution network;
wherein the constituting an energy-saving strategy comprises: according to coverage of and a geographic location of the base station of which the cell performance index value is beyond the cell performance index threshold value in the message, acquiring coverage, a cell performance index value and an energy-saving state of a surrounding base station of the base station; and constituting the energy-saving strategy according to the acquired information and the cell performance index value in the message;
wherein the cell performance index value of the base station being beyond the cell performance index threshold value refers that: the cell performance index value of the base station is lower than a lower limit of the threshold value; the cell performance index value of the base station is greater than an upper limit of the threshold value, and the base station of which the cell performance index value is beyond the cell performance index threshold value is in an non-energy saving state; the cell performance index value of the base station is greater than an upper limit of the threshold value, and the base station of which the cell performance index value is beyond the cell performance index threshold value is in an energy-saving compensation state.

2. The method according to claim 1, wherein the acquiring coverage, a cell performance index value and an energy-saving state of a surrounding base station comprises:
finding, by the network manager according to the coverage of and the geographic location of the base station of which the cell performance index value is beyond the cell performance index threshold value in the message, a surrounding base station of the base station of which the cell performance index value is beyond the cell performance index threshold value, and sending a message to the surrounding base station; and
after receiving the message, returning, by the surrounding base station, the information containing the coverage, the cell performance index value and the energy-saving state to the network manager.

3. The method according to claim 1 or 2, wherein the cell performance index value of the base station being beyond the cell performance index threshold value refers that the cell performance index value of the base station is lower than a lower limit of the threshold value;
the constituting the energy-saving strategy according to the acquired information and the cell performance index value in the message comprises:
finding, by the network manager, a base station of which coverage is overlapped with the coverage of the base station of which the cell performance index value is beyond the cell performance index threshold value, and selecting a base station which can provide coverage compensation in all the base stations of which the coverage is overlapped; and
according to a service type and the cell performance index value of the base station in the message, selecting, in all the base stations which can provide coverage compensation, a base station which can bear service load of the base station of which the cell performance index value is beyond the cell performance index threshold value, and notifying the base station of which the cell performance index value is beyond the cell performance index threshold value to power down.

4. The method according to claim 1 or 2, wherein the cell performance index value of the base station being beyond the cell performance index threshold value refers that the cell performance index value of the base station is greater than an upper limit of the threshold value, and the base station of which the cell performance index value is beyond the cell performance index threshold value is in an non-energy saving state;
the constituting the energy-saving strategy according to the acquired information and the cell performance index value in the message comprises:
finding a base station of which coverage is overlapped with the coverage of the base station of which the cell performance index value is beyond the cell performance index threshold value, and determining, in all the base stations of which the coverage is overlapped, whether there is a base station in an energy-saving state; if so, notifying the base station in the energy-saving state to power on so as to share service load of the base station of which the cell performance index value is beyond the cell performance index threshold value.

5. The method according to claim 1 or 2, wherein the cell performance index value of the base station being beyond the cell performance index threshold value refers that the cell performance index value of the base station is greater than an upper limit of the threshold value, and the base station of which the cell performance index value is beyond the cell performance index threshold value is in an energy-saving compensation state;
the constituting the energy-saving strategy according to the acquired information and the cell performance index value in the message comprises:
finding a base station of which coverage is overlapped with the coverage of the base station of which the cell performance index value is beyond the cell performance index threshold value, and determining, in all the base stations of which the coverage is overlapped, whether there is a base station in an energy-saving state; if so, notifying the base station in the energy-saving state to power on so as to share service load of the base station of which the cell performance index value is beyond the cell performance index threshold value; and exiting, by the base station of which the cell performance index value is beyond the cell performance index threshold value, the energy-saving compensation state.

6. An energy-saving control system for a wireless network, **characterized in that** the system comprises:: a network manager (21) and a network element (22);
the network manager (21) is configured to set energy-saving control parameters and send the parameters to the network element (22); and to constitute an energy-saving strategy and notify the network element (22) to perform energy-saving operation after receiving a message reported by the network element (22); and
the network element (22) is configured to compare a cell performance index value of a base station controlled by the network element (22) itself with a cell performance index threshold value contained in the energy-saving control parameters periodically after receiving the energy-saving control parameters sent from the network manager (21), to report the message to the network manager (21) when the cell performance index value of the base station is beyond the cell performance index threshold value, and to perform the energy-saving operation after receiving the notification from the network manager (21);
wherein a cell performance index of the network element is selected according to a type of services born by the network element itself of a GSM network or 3rd generation network or a long term evolution network;
wherein the network manager (21) further comprises an energy-saving strategy analysis module (212), configured to constitute an energy-saving strategy and notify the network element (22) to perform energy-saving operation after receiving a message reported by the network element (22);
wherein the energy-saving strategy analysis module (212) is specifically configured to acquire coverage, a cell performance index value and an energy-saving state of a surrounding base station of the base station according to coverage of and a geographic location of the base station of which the cell performance index value is beyond the cell performance index threshold value in the message, and to constitute the energy-saving strategy according to the acquired information and the cell performance index value in the message;
wherein the cell performance index value of the base station being beyond the cell performance index threshold value refers that: the cell performance index value of the base station is lower than a lower limit of the threshold value; the cell performance index value of the base station is greater than an upper limit of the threshold value, and the base station of which the cell performance index value is beyond the cell performance index threshold value is in an non-energy saving state; the cell performance index value of the base station is greater than an upper limit of the threshold value, and the base station of which the cell performance index value is beyond the cell performance index threshold value is in an energy-saving compensation state.

7. The system according to claim 6, wherein the network manager (21) further comprises: a setting module (211);
the setting module (211) is configured to set energy-saving control parameters and send the parameters to the network element (22).

8. The system according to claim 6 or 7, wherein the network element (22) further comprises: a comparison module (221), a report module (222) and an execution module (223);
the comparison module (221) is configured to compare a cell performance index value of a base station controlled by the network element (22) itself with a cell performance index threshold value contained in the energy-saving control parameters periodically after receiving the energy-saving control parameters sent from the network manager (21), to send the message to the report module (222) when the cell performance index value of the base station is beyond the cell performance index threshold value;
the report module (222) is configured to report the message to the network manager (21) after receiving the message sent from the comparison module (221); and
the execution module (223) is configured to perform the energy-saving operation after receiving the notification from the network manager (21).

## Patentansprüche

1. Energiesparendes Steuerungsverfahren für ein drahtloses Netzwerk, **dadurch gekennzeichnet, dass** das Verfahren Folgendes umfasst: Einstellen, durch einen Netzwerkverwalter, von energiesparenden Steuerungsparametern, und Senden der Parameter an ein Netzwerkelement, das an der energiesparenden Steuerung (101) beteiligt ist;
nach dem Empfang der energiesparenden Steuerungsparameter periodisches Vergleichen, durch das Netzwerkelement, eines Zellleistungs-Indexwerts einer Basisstation, gesteuert durch das Netzwerkelement selbst, mit einem Zellleistungsindex-Schwellenwert, der in den energiesparenden Steuerungsparametern enthalten ist, und Übertragen einer Meldung an den Netzwerkverwalter, wenn der Zellleistungsindexwert der Basisstation jenseits des Zellleistungsindex-Schwellenwerts (102) liegt; und
nach dem Empfang der Meldung, Erstellen, durch den Netzwertverwalter, einer energiesparenden Strategie und Benachrichtigen des Netzwerkelements, eine energiesparenden Betrieb (103) durchzuführen;
wobei ein Zellleistungsindex des Netzwerkelements gemäß einer Art von Dienstleistungen ausgewählt wird, die vom Netzwerkelement selbst eines GSM-Netzwerks oder eines Netzwerks der 3. Generation oder eines Langzeitevolutionsnetzwerks getragen wird;
wobei das Erstellen einer energiesparenden Strategie Folgendes umfasst: gemäß der Reichweite und einer geographischen Lage der Basistation, deren Zellleistungsindexwert jenseits des Zellleistungsindex-Schwellenwerts in der Meldung liegt, Erfassen einer Reichweite, eines Zellleistungsindexwerts und eines energiesparenden Zustands einer benachbarten Basisstation der Basisstation; und erstellen der energiesparenden Strategie gemäß der erfassten Information und dem Zellleistungsindexwert in der Meldung;
wobei der Zellleistungsindexwert der Basisstation, der jenseits des Zellleistungsindex-Schwellenwerts liegt, darauf verweist, dass: der Zellleistungsindexwert der Basisstation geringer als ein unterer Grenzwert des Schwellenwerts ist; der Zellleistungsindexwert der Basisstation größer als ein oberer Grenzwert des Schwellenwerts ist; und die Basisstation, deren Zellleistungsindexwert jenseits des Zellleistungsindex-Schwellenwerts liegt, sich in einem nicht energiesparenden Zustand befindet; der Zellleistungsindexwert der Basisstation größer als ein oberer Grenzwert des Schwellenwerts ist; und die Basisstation, deren Zellleistungsindexwert jenseits des Zellleistungsindex-Schwellenwerts liegt, sich in einem energiesparenden Kompensationszustand befindet.

2. Verfahren nach Anspruch 1, wobei das Erfassen einer Reichweite, eines Zellleistungsindexwerts und eines energiesparenden Zustands einer benachbarten Basisstation Folgendes umfasst:
Finden, durch den Netzwerkverwalter, gemäß der Reichweite und einer geographischen Lage der Basistation, deren Zellleistungsindexwert jenseits des Zellleistungsindex-Schwellenwerts in der Meldung liegt, einer benachbarten Basisstation der Basisstation, deren Zellleistungsindexwert jenseits des Zellleistungsindex-Schwellenwerts liegt, und Senden einer Meldung an die benachbarte Basisstation; und,
nach dem Empfang der Meldung, Zurückgeben, durch die benachbarte Basisstation, der Information, die die Reichweite den Zellleistungsindexwert und den energiesparenden Zustand enthält, an den Netzwerkverwalter.

3. Verfahren nach Anspruch 1 oder 2, wobei die Tatsache, dass der Zellleistungsindexwert der Basisstation jenseits des Zellleistungsindex-Schwellenwerts liegt, darauf verweist, dass der Zellleistungsindexwert der Basisstation geringer als ein unterer Grenzwert des Schwellenwerts ist;
wobei das Erstellen der energiesparenden Strategie gemäß der erfassten Information und dem Zellleistungsindexwert in der Meldung Folgendes umfasst:
Finden, durch den Netzwerkverwalter, einer Basisstation, deren Reichweite mit der Reichweite der Basisstation überlappt, deren Zellleistungsindexwert jenseits des Zellleistungsindex-Schwellenwerts liegt, und Auswählen einer Basisstation, die eine Reichweitenkompensation in all den Basisstationen, von denen die Reichweite überlappt, bereitstellen kann; und
gemäß einer Dienstleistungsart und dem Zellleistungsindexwert der Basisstation in der Meldung, Auswählen, in all den Basisstationen, die eine Reichweitenkompensation bereitstellen können, einer Basisstation, die Dienstleistungslast der Basisstation tragen kann, deren Zellleistungsindexwert jenseits des Zellleistungsindex-Schwellenwerts liegt, und Benachrichtigen der Basisstation, deren Zellleistungsindexwert jenseits des Zellleistungsindex-Schwellenwerts liegt, um abzuschalten.

4. Verfahren nach Anspruch 1 oder 2, wobei die Tatsache, dass der Zellleistungsindexwert der Basisstation jenseits des Zellleistungsindex-Schwellenwerts liegt, darauf verweist, dass der Zellleistungsindexwert der Basisstation größer als ein oberer Grenzwert des Schwellenwerts ist und die Basisstation, deren Zellleistungsindexwert jenseits des Zellleistungsindex-Schwellenwerts liegt, sich in einem nicht energiesparenden Zustand befindet;
wobei das Erstellen der energiesparenden Strategie gemäß der erfassten Information und dem Zellleistungsindexwert in der Meldung Folgendes umfasst:
Finden einer Basisstation, deren Reichweite mit der Reichweite der Basisstation überlappt, deren Zellleistungsindexwert jenseits des Zellleistungsindex-Schwellenwerts liegt, und Bestimmen, in all den Basisstationen, von denen die Reichweite überlappt, ob sich eine Basisstation in einem energiesparenden Zustand befindet; wenn dies der Fall ist, Benachrichtigen der Basisstation im energiesparenden Zustand, um weiter eingeschaltet zu sein, um die Dienstleistungslast der Basisstation zu teilen, deren Zellleistungsindexwert jenseits des Zellleistungsindex-Schwellenwerts liegt.

5. Verfahren nach Anspruch 1 oder 2, wobei die Tatsache, dass der Zellleistungsindexwert der Basisstation jenseits des Zellleistungsindex-Schwellenwerts liegt, darauf verweist, dass der Zellleistungsindexwert der Basisstation größer als ein oberer Grenzwert des Schwellenwerts ist und die Basisstation, deren Zellleistungsindexwert jenseits des Zellleistungsindex-Schwellenwerts liegt, sich in einem energiesparenden Kompensationszustand befindet;
wobei das Erstellen der energiesparenden Strategie gemäß der erfassten Information und dem Zellleistungsindexwert in der Meldung Folgendes umfasst:
Finden einer Basisstation, deren Reichweite mit der Reichweite der Basisstation überlappt, deren Zellleistungsindexwert jenseits des Zellleistungsindex-Schwellenwerts liegt, und Bestimmen, in all den Basisstationen, von denen die Reichweite überlappt, ob sich eine Basisstation in einem energiesparenden Zustand befindet; wenn dies der Fall ist, Benachrichtigen der Basisstation im energiesparenden Zustand, um weiter eingeschaltet zu sein, um die Dienstleistungslast zu teilen, deren Zellleistungsindexwert jenseits des Zellleistungsindex-Schwellenwerts liegt; und Verlassen, durch die Basisstation, deren Zellleistungsindexwert jenseits des Zellleistungsindex-Schwellenwerts liegt, des energiesparenden Kompensationszustands.

6. Energiesparendes Steuerungssystem für ein drahtloses Netzwerk, **dadurch gekennzeichnet, dass** das Verfahren Folgendes umfasst: einen Netzwerkverwalter (21) und ein Netzwerkelement (22),
wobei der Netzwerkverwalter (21) konfiguriert ist, um energiesparende Steuerungsparameter einzustellen und die Parameter an das Netzwerkelement (22) zu senden; und eine energiesparende Strategie festzusetzen und das Netzwerkelement (22) zu benachrichtigen, um einen energiesparenden Betrieb nach dem Empfang einer Meldung durchzuführen, die vom Netzwerkelement (22) übertragen wird; und
das Netzwerkelement (22) konfiguriert ist, um einen Zellleistungsindexwert einer Basisstation, kontrolliert durch das Netzwerkelement (22) selbst, mit einem Zellleistungsindex-Schwellenwert, der in den energiesparenden Steuerungsparametern enthalten ist, periodisch zu vergleichen, nachdem die energiesparenden Steuerungsparamenter vom Netzwerkverwalter (21) gesendet wurden, um die Meldung an den Netzwerkverwalter (21) zu übertragen, wenn der Zellleistungsindexwert der Basisstation jenseits des Zellleistungsindex-Schwellenwerts liegt, und den energiesparenden Betrieb durchzuführen, nachdem die Benachrichtigung vom Netzwerkverwalter (21) empfangen wurde;
wobei ein Zellleistungsindex des Netzwerkelements gemäß einer Dienstleistungsart ausgewählt wird, die vom Netzwerkelement selbst eines GSM-Netzwerks oder eines Netzwerks der 3. Generation oder eines Langzeitevolutionsnetzwerks getragen wird;
wobei der Netzwerkverwalter (21) weiter ein Energiesparstrategie-Analysemodul (212) umfasst, das konfiguriert ist, um eine energiesparende Strategie festzusetzen und das Netzwerkelement (22) zu benachrichtigen, um einen energiesparenden Betrieb nach dem Empfang einer Meldung durchzuführen, die vom Netzwerkelement (22) übertragen wird;
wobei das Energiesparstrategie-Analysemodul (212) spezifisch konfiguriert ist, um eine Reichweite, einen Zellleistungswertindex und einen energiesparenden Zustand einer benachbarten Basisstation der Basisstation gemäß der Reichweite und einer geographischen Lage der Basistation zu erfassen, deren Zellleistungsindexwert jenseits des Zellleistungsindex-Schwellenwerts in der Meldung liegt und die energiesparende Strategie gemäß der erfassten Information und dem Zellleistungsindexwert in der Meldung festzusetzen;
wobei der Zellleistungsindexwert der Basisstation, der jenseits des Zellleistungsindex-Schwellenwerts liegt, darauf verweist, dass: der Zellleistungsindexwert der Basisstation geringer als ein unterer Grenzwert des Schwellenwerts ist; der Zellleistungsindexwert der Basisstation größer als ein oberer Grenzwert des Schwellenwerts ist; und die Basisstation, deren Zellleistungsindexwert jenseits des Zellleistungsindex-Schwellenwerts liegt, sich in einem nicht energiesparenden Zustand befindet; der Zellleistungsindexwert der Basisstation größer als ein oberer Grenzwert des Schwellenwerts ist, und die Basisstation, deren Zellleistungsindexwert jenseits des Zellleistungsindex-Schwellenwerts liegt, sich in einem energiesparenden Kompensationszustand befindet.

7. System nach Anspruch 6, wobei der Netzwerkverwalter (21) weiter Folgendes umfasst: ein Einstellungsmodul (211);
wobei das Einstellungsmodul (211) konfiguriert ist, um die energiesparenden Steuerungsparameter einzustellen und die Parameter an das Netzwerkelement (22) zu senden.

8. System nach Anspruch 6 oder 7, wobei der Netzwerkverwalter (22) weiter Folgendes umfasst: ein Vergleichsmodul (221), ein Übertragungsmodul (222) und ein Ausführungsmodul (223);
wobei das Vergleichsmodul (221) konfiguriert ist, um einen Zellleistungsindexwert einer Basisstation, gesteuert durch das Netzwerkelement (22) selbst, mit einem Zellleistungsindex-Schwellenwert, der in den energiesparenden Steuerungsparametern enthalten ist, nach dem Empfang der energiesparenden Steuerungsparameter, gesendet vom Netzwerkverwalter (21), periodisch zu vergleichen, um die Meldung an das Übertragungsmodul (222) zu senden, wenn der Zellleistungsindexwert der Basisstation jenseits des Zellleistungsindex-Schwellenwerts liegt;
wobei das Übertragungsmodul (222) konfiguriert ist, um die Meldung an den Netzwerkverwalter (21) nach dem Empfang der Meldung zu übertragen, die vom Vergleichsmodul (221) gesendet wurde; und
wobei das Ausführungsmodul (223) konfiguriert ist, und den energiesparenden Betrieb durchzuführen, nachdem die Benachrichtigung vom Netzwerkverwalter (21) empfangen wurde.

## Revendications

1. Procédé de commande d'économie d'énergie pour un réseau sans fil, **caractérisé en ce que** le procédé comprend les étapes ci-après consistant à : définir, par le biais d'un gestionnaire de réseau, des paramètres de commande d'économie d'énergie, et envoyer les paramètres à un élément de réseau prenant part à une commande d'économie d'énergie (101) ;
suite à la réception des paramètres de commande d'économie d'énergie, comparer, par le biais de l'élément de réseau, une valeur d'indice de performance de cellule d'une station de base commandée par l'élément de réseau lui-même à une valeur de seuil d'indice de performance de cellule incluse dans les paramètres de commande d'économie d'énergie périodiquement, et signaler un message au gestionnaire de réseau lorsque la valeur d'indice de performance de cellule de la station de base est supérieure à la valeur de seuil d'indice de performance de cellule (102) ; et
suite à la réception du message, établir, par le biais du gestionnaire de réseau, une stratégie d'économie d'énergie et notifier à l'élément de réseau de mettre en oeuvre une opération d'économie d'énergie (103) ;
dans lequel un indice de performance de cellule de l'élément de réseau est sélectionné selon un type de services pris en charge par l'élément de réseau lui-même d'un réseau GSM, ou d'un réseau de troisième génération, ou d'un réseau de technologie d'évolution à long terme ;
dans lequel l'étape d'établissement d'une stratégie d'économie d'énergie comprend l'étape consistant à : selon une couverture et un emplacement géographique de la station de base dont la valeur d'indice de performance de cellule est supérieure à la valeur de seuil d'indice de performance de cellule dans le message, acquérir une couverture, une valeur d'indice de performance de cellule et un état d'économie d'énergie d'une station de base voisine de la station de base ; et établir la stratégie d'économie d'énergie selon les informations acquises et la valeur d'indice de performance de cellule dans le message ;
dans lequel la valeur d'indice de performance de cellule de la station de base qui est supérieure à la valeur de seuil d'indice de performance de cellule fait référence au fait que : la valeur d'indice de performance de cellule de la station de base est inférieure à une limite inférieure de la valeur de seuil ; la valeur d'indice de performance de cellule de la station de base est supérieure à une limite supérieure de la valeur de seuil, et la station de base dont la valeur d'indice de performance de cellule est supérieure à la valeur de seuil d'indice de performance de cellule est dans un état sans économie d'énergie ; la valeur d'indice de performance de cellule de la station de base est supérieure à une limite supérieure de la valeur de seuil, et la station de base dont la valeur d'indice de performance de cellule est supérieure à la valeur de seuil d'indice de performance de cellule est dans un état de compensation d'économie d'énergie.

2. Procédé selon la revendication 1, dans lequel l'étape d'acquisition de couverture, d'une valeur d'indice de performance de cellule et d'un état d'économie d'énergie d'une station de base voisine comporte les étapes ci-dessous consistant à :
rechercher, par le biais du gestionnaire de réseau, selon la couverture et l'emplacement géographique de la station de base dont la valeur d'indice de performance de cellule est supérieure à la valeur de seuil d'indice de performance de cellule dans le message, une station de base voisine de la station de base dont la valeur d'indice de performance de cellule est supérieure à la valeur de seuil d'indice de performance de cellule, et envoyer un message à la station de base voisine ; et
suite à la réception du message, renvoyer, par le biais de la station de base voisine, les informations contenant la couverture, la valeur d'indice de performance de cellule et l'état d'économie d'énergie au gestionnaire de réseau.

3. Procédé selon la revendication 1 ou 2, dans lequel la valeur d'indice de performance de cellule de la station de base qui est supérieure à la valeur de seuil d'indice de performance de cellule fait référence au fait que la valeur d'indice de performance de cellule de la station de base est inférieure à une limite inférieure de la valeur de seuil ;
l'étape d'établissement de la stratégie d'économie d'énergie selon les informations acquises et la valeur d'indice de performance de cellule dans le message comprend les étapes ci-dessous consistant à :
rechercher, par le biais du gestionnaire de réseau, une station de base dont la couverture est en chevauchement avec la couverture de la station de base dont la valeur d'indice de performance de cellule est supérieure à la valeur de seuil d'indice de performance de cellule, et sélectionner une station de base en mesure de fournir une compensation de couverture dans toutes les stations de base dont la couverture est en chevauchement ; et
selon un type de service et la valeur d'indice de performance de cellule de la station de base dans le message, sélectionner, dans toutes les stations de base en mesure de fournir une compensation de couverture, une station de base qui est en mesure de prendre en charge une charge de service de la station de base dont la valeur d'indice de performance de cellule est supérieure à la valeur de seuil d'indice de performance de cellule, et notifier à la station de base dont la valeur d'indice de performance de cellule est supérieure à la valeur de seuil d'indice de performance de cellule de se mettre hors tension.

4. Procédé selon la revendication 1 ou 2, dans lequel la valeur d'indice de performance de cellule de la station de base qui est supérieure à la valeur de seuil d'indice de performance de cellule fait référence au fait que la valeur d'indice de performance de cellule de la station de base est supérieure à une limite supérieure de la valeur de seuil, et au fait que la station de base dont la valeur d'indice de performance de cellule est supérieure à la valeur de seuil d'indice de performance de cellule est dans un état sans économie d'énergie ;
l'étape d'établissement de la stratégie d'économie d'énergie selon les informations acquises et la valeur d'indice de performance de cellule dans le message comprend les étapes ci-dessous consistant à :
rechercher une station de base dont la couverture est en chevauchement avec la couverture de la station de base dont la valeur d'indice de performance de cellule est supérieure à la valeur de seuil d'indice de performance de cellule, et déterminer, dans toutes les stations de base dont la couverture est en chevauchement, s'il existe une station de base dans un état d'économie d'énergie ; le cas échéant, notifier à la station de base dans l'état d'économie d'énergie de se mettre sous tension de manière à partager une charge de service de la station de base dont la valeur d'indice de performance de cellule est supérieure à la valeur de seuil d'indice de performance de cellule.

5. Procédé selon la revendication 1 ou 2, dans lequel la valeur d'indice de performance de cellule de la station de base qui est supérieure à la valeur de seuil d'indice de performance de cellule fait référence au fait que la valeur d'indice de performance de cellule de la station de base est supérieure à une limite supérieure de la valeur de seuil, et au fait que la station de base dont la valeur d'indice de performance de cellule est supérieure à la valeur de seuil d'indice de performance de cellule est dans un état de compensation d'économie d'énergie ;
l'étape d'établissement de la stratégie d'économie d'énergie selon les informations acquises et la valeur d'indice de performance de cellule dans le message comprend les étapes ci-dessous consistant à :
rechercher une station de base dont la couverture est en chevauchement avec la couverture de la station de base dont la valeur d'indice de performance de cellule est supérieure à la valeur de seuil d'indice de performance de cellule, et déterminer, dans toutes les stations de base dont la couverture est en chevauchement, s'il existe une station de base dans un état d'économie d'énergie ; le cas échéant, notifier à la station de base dans l'état d'économie d'énergie de se mettre sous tension de manière à partager une charge de service de la station de base dont la valeur d'indice de performance de cellule est supérieure à la valeur de seuil d'indice de performance de cellule, et quitter, par le biais de la station de base dont la valeur d'indice de performance de cellule est supérieure à la valeur de seuil d'indice de performance de cellule, l'état de compensation d'économie d'énergie.

6. Système de commande d'économie d'énergie pour un réseau sans fil, **caractérisé en ce que** le système comprend : un gestionnaire de réseau (21) et un élément de réseau (22) ;
dans lequel le gestionnaire de réseau (21) est configuré de manière à définir des paramètres de commande d'économie d'énergie et à envoyer les paramètres à l'élément de réseau (22) ; et à établir une stratégie d'économie d'énergie et à notifier à l'élément de réseau (22) de mettre en oeuvre une opération d'économie d'énergie suite à la réception d'un message signalé par l'élément de réseau (22) ; et
l'élément de réseau (22) est configuré de manière à comparer une valeur d'indice de performance de cellule d'une station de base commandée par l'élément de réseau (22) lui-même à une valeur de seuil d'indice de performance de cellule incluse dans les paramètres de commande d'économie d'énergie périodiquement suite à la réception des paramètres de commande d'économie d'énergie envoyés par le gestionnaire de réseau (21), à signaler le message au gestionnaire de réseau (21) lorsque la valeur d'indice de performance de cellule de la station de base est supérieure à la valeur de seuil d'indice de performance de cellule, et à mettre en oeuvre l'opération d'économie d'énergie suite à la réception de la notification en provenance du gestionnaire de réseau (21) ;
dans lequel un indice de performance de cellule de l'élément de réseau est sélectionné selon un type de services pris en charge par l'élément de réseau lui-même d'un réseau GSM, ou d'un réseau de troisième génération, ou d'un réseau de technologie d'évolution à long terme ;
dans lequel le gestionnaire de réseau (21) comprend en outre un module d'analyse de stratégie d'économie d'énergie (212), configuré de manière à établir une stratégie d'économie d'énergie et à notifier à l'élément de réseau (22) de mettre en oeuvre une opération d'économie d'énergie suite à la réception d'un message signalé par l'élément de réseau (22) ;
dans lequel le module d'analyse de stratégie d'économie d'énergie (212) est spécifiquement configuré de manière à acquérir une couverture, une valeur d'indice de performance de cellule et un état d'économie d'énergie d'une station de base voisine de la station de base selon une couverture et un emplacement géographique de la station de base dont la valeur d'indice de performance de cellule est supérieure à la valeur de seuil d'indice de performance de cellule dans le message, et à établir la stratégie d'économie d'énergie selon les informations acquises et la valeur d'indice de performance de cellule dans le message ;
dans lequel la valeur d'indice de performance de cellule de la station de base qui est supérieure à la valeur de seuil d'indice de performance de cellule fait référence au fait que : la valeur d'indice de performance de cellule de la station de base est inférieure à une limite inférieure de la valeur de seuil ; la valeur d'indice de performance de cellule de la station de base est supérieure à une limite supérieure de la valeur de seuil, et la station de base dont la valeur d'indice de performance de cellule est supérieure à la valeur de seuil d'indice de performance de cellule est dans un état sans économie d'énergie ; la valeur d'indice de performance de cellule de la station de base est supérieure à une limite supérieure de la valeur de seuil, et la station de base dont la valeur d'indice de performance de cellule est supérieure à la valeur de seuil d'indice de performance de cellule est dans un état de compensation d'économie d'énergie.

7. Système selon la revendication 6, dans lequel le gestionnaire de réseau (21) comprend en outre : un module de définition (211) ;
le module de définition (211) est configuré de manière à définir des paramètres de commande d'économie d'énergie et à envoyer les paramètres à l'élément de réseau (22).

8. Système selon la revendication 6 ou 7, dans lequel l'élément de réseau (22) comprend en outre : un module de comparaison (221), un module de rapport (222) et un module d'exécution (223) ;
dans lequel le module de comparaison (221) est configuré de manière à comparer une valeur d'indice de performance de cellule d'une station de base commandée par l'élément de réseau (22) lui-même à une valeur de seuil d'indice de performance de cellule incluse dans les paramètres de commande d'économie d'énergie périodiquement suite à la réception des paramètres de commande d'économie d'énergie envoyés par le gestionnaire de réseau (21), à envoyer le message au module de rapport (222) lorsque la valeur d'indice de performance de cellule de la station de base est supérieure à la valeur de seuil d'indice de performance de cellule ;
le module de rapport (222) est configuré de manière à signaler le message au gestionnaire de réseau (21) suite à la réception du message envoyé par le module de comparaison (221) ; et
le module d'exécution (223) est configuré de manière à mettre en oeuvre l'opération d'économie d'énergie suite à la réception de la notification en provenance du gestionnaire de réseau (21).
